(19) Europäisches Patentamt

European Patent Office

Office européen des brevets

(11) **EP 1 528 050 A2**

(12) **EUROPÄISCHE PATENTANMELDUNG**

(43) Veröffentlichungstag:
**04.05.2005 Patentblatt 2005/18**

(51) Int Cl.⁷: **C05D 3/00**, C05D 5/00,
C05F 7/00

(21) Anmeldenummer: **04025597.8**

(22) Anmeldetag: **28.10.2004**

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **28.10.2003 DE 10350391**

(71) Anmelder: **Greenfield Holding GmbH
1030 Wien (AT)**

(72) Erfinder: **JÜSSEN, Armin
51252 Simmerath (DE)**

(74) Vertreter: **Wolff, Felix, Dr. et al
Kutzenberger & Wolff
Theodor-Heuss-Ring 23
50668 Köln (DE)**

(54) **Bodenmaterial**

(57)    Die vorliegende Erfindung betrifft ein Bodenmaterial, bei dem die Trockensubstanz einen organischen Kohlenstoffgehalt (TOC) von 20 bis 40 Gew-%, vorzugsweise 25-30 Gew-%, aufweist. Des weiteren betrifft die vorliegende Erfindung die Verwendung des erfindungsgemäßen Bodenmaterials zur Begrünung von wüstenartigem Gelände.

**EP 1 528 050 A2**

Printed by Jouve, 75001 PARIS (FR)

**Beschreibung**

Die vorliegende Erfindung betrifft ein Bodenmaterial, bei dem die Trockensubstanz einen organischen Kohlenstoffgehalt (TOC) von 20 bis 40 Gew-%, vorzugsweise 25-30 Gew-%, aufweist. Des weiteren betrifft die vorliegende Erfindung die Verwendung des erfindungsgemäßen Bodenmaterials zur Begrünung von wüstenartigem Gelände.

Natürliches Bodenmaterial ist nicht in allen Teilen der Erde in ausreichenden Mengen vorhanden, weil es durch Erosion abgetragen, weggeschwemmt und/oder ausgelaugt worden ist. Dem entsprechend gibt es in diesen Gebieten kein pflanzliches Wachstum.

Der vorliegenden Erfindung liegt deshalb die Aufgabe zugrunde, ein Bodenmaterial zur Verfügung zu stellen, das fruchtbar ist und sich zur Kultivierung von Pflanzen, insbesondere in wüstenartigen Gebieten eignet.

Gelöst wird die Aufgabe mit einem Bodenmaterial dessen Trockenmasse einen organischer Kohlenstoffgehalt (TOC) von 20 bis 40 Gew-%, vorzugsweise 25 bis 30 Gew-%, aufweist.

Es war für den Fachmann überaus erstaunlich und nicht zu erwarten, dass sich dieses Material besonders gut für die Begrünung von wüstenartigen Landstrichen eignet. Das erfindungsgemäße Bodenmaterial ist einfach und kostengünstig herzustellen.

Erfindungsgemäß weist das Bodenmaterial eine Trockenmasse auf, deren Gesamter organischer Kohlenstoffgehalt (TOC) 20 bis 40 Gew-%, vorzugsweise 25 bis 30 Gew-%, beträgt.

Trockenmasse im Sinne der Erfindung ist die Masse, die nach dem Trocknen unter Bedingungen, wie beispielsweise in Römps Chemielexikon, 8. neu bearbeitete und erweitertete Auflage, S. 4372-4374, angegeben sind, vorliegt. Diese Textstelle wird hiermit als Referenz angegeben und gilt somit als Teil der Offenbarung. Sie wird beispielsweise gemäß DIN 48414, Teil 2 bestimmt.

TOC im Sinne der vorliegenden Erfindung ist der gesamte organische Kohlenstoff. Die Bestimmung des TOC erfolgt mit dem Fachmann hinlänglich bekannten Analyseverfahren, beispielsweise gemäß DIN 38409, Teil 3.

Vorzugsweise sind 3 bis 12 Gew-%, besonders bevorzugt 5 bis 10 Gew-%, des TOCs organischer Stickstoff.

Weiterhin bevorzugt weist das Bodenmaterial einen Glühverlust von 35 - 70 Gew.-%, vorzugsweise 45 - 65 Gew.-% jeweils bezogen auf die Trockenmasse, auf. Der Glühverlust wird beispielsweise gemäß der DIN 18128 bestimmt.

In einer anderen bevorzugten Ausführungsform der vorliegenden Erfindung weist das Bodenmaterial 3 bis 10 Gew-%, vorzugsweise 4 bis 7 Gew-%, Calciumoxyd (CaO), jeweils bezogen auf die Trochenmasse, auf.

Weiterhin bevorzugt sind in dem Bodenmaterial 1 bis 7 Gew-%, vorzugsweise 2 bis 5 Gew-%, Magnesiumoxyd (MgO), jeweils bezogen auf die Trockenmasse, vorhanden.

Vorzugsweise weist das Bodenmaterial 3 bis 10 Gew-%, vorzugsweise 4 bis 7 Gew-%, Calciumoxyd (CaO), jeweils bezogen auf die Trockenmasse, auf.

In einer anderen bevorzugten Ausführungsform der vorliegenden Erfindung sind in dem Bodenmaterial 0,5 bis 5 Gew-%, vorzugsweise 1 bis 4 Gew-%, Phosphat, jeweils bezogen auf die Trockenmasse, vorhanden.

Außerdem bevorzugt weist das Bodenmaterial 0,5 bis 4 Gew-%, vorzugsweise 0,7 bis 3 Gew-%, Ammonium-Stickstoff, jeweils bezogen auf die Trockenmasse, vorhanden.

Vorzugsweise weist das Bodenmaterial einen Anteil von bis zu 80 Gew-%, besonders bevorzugt bis zu 70 Gew-%, jeweils bezogen auf die Gesamtmasse an Wasser, auf.

Vorzugsweise ist das Bodenmaterial ein Gemisch aus Hafenschlick und Gülle.

Unter Hafenschlick im Sinne der Erfindung soll verallgemeinernd, in Hafenbecken abgelagerte Sedimente, Sedimente entlang von oder nahe an Seewegen, Sedimente an Flußmündungen oder dergleichen, verstanden werden. Der Hafenschlick kann behandelt sein. Eine Behandlung im Sinne der Erfindung ist eine Entwässerung aber auch eine zumindest teilweise Entfernung von unerwünschten Substanzen wie beispielsweise Organozinnverbindungen. Diese Entfernung dieser Substanzen erfolgt vorzugsweise durch ein Verfahren wie es in der DE 102 50 533.0 beschrieben ist. Diese Patentanmeldung wird hiermit als Referenz eingeführt und gilt somit als Teil der Offenbarung. Bei diesem Verfahren wird mittels in einer Reaktionszelle erzeugtem radikalischen Stickstoff, beispielsweise Tributylzinn, aufgespalten und in umwelttechnisch gesehen unproblematische organische Verbindung überführt. Diese Verfahren ist auch auf weitere zinnorganische Verbindungen sowie ? Verbindungen als umweltbedenklich einzustufende Substanzen anwendbar. Weiterhin werden Schwermetalle und CSB-relevante Stoffe, zumindest teilweise, oxidiert. Die oxidierten Substanzen flocken, zumindest teilweise, aus und werden anhand der in dem Reaktionszeiten erzeugten Sauerstoffbläschen an die Oberfläche getragen und können dort von dem übrigen Wasserstrom separiert werden.

Der Hafenschlick wird so auf kostengünstige und einfache Weise in einen umwelttechnisch unproblematisches Produkt verwandelt und es entsteht ein fester Kleiboden. Dies ist ein neuer Rohstoff, der nicht den üblichen Abfallbestimmungen unterliegt. Die Flocken werden in eine Filterpresse oder eine Schlammpresse gepumpt und weiter entwässert und können dann ebenfalls als neuer Rohstoff weiter verwendet werden.

Hafenschlick, insbesondere in seiner entwässerten Form ist ein sehr fester und schwerer Kleiboden. Wegen seines hohen Lehmanteils wird er nicht erodiert und eignet sich deshalb insbesondere zur Verwendung in wüstenartigen Gegenden.

Gülle im Sinne der Erfindung entsteht bei der Tierhaltung, insbesondere bei der Rinder-, Schweine- oder Hühnerhaltung. Die dort entstehende Gülle wird vorzugsweise entwässert und vorzugsweise nur der entwässerte Teil wird gegebenenfalls nach einer Weiterbehandlung für die Herstellung des erfindungsgemäßen Bodenmaterials eingesetzt.

Eine derartige Behandlung kann beispielsweise dann erfolgen, wenn die Gülle nicht keimfrei ist und beispielsweise Kolibakterien aufweist. Die Gülle muss dann beispielsweise in dem oben genannten Elektroflotationsverfahren behandelt werden.

Vorzugsweise beträgt das Mischungsverhältnis zwischen Hafenschlick und Gülle 0,3:1 - 3:1, besonders bevorzugt 0,7:1 -1,5:1, ganz besonders bevorzugt 0,8:1 - 1,2:1.

Im folgenden wird die Erfindung anhand von Beispiel 1 erläutert, das jedoch den allgemeinen Erfindungsgedanken nicht einschränkt.

Beispiel 1

Bodensubstrat (Naturdünger) bestehend aus 50 % Gülle-Feststoff aus Holland und 50 % Baggergut aus Seehausen

| Zusammensetzung (Grundlage: 1 kg) | |
| --- | --- |
| Wasser | 673 g |
| Trockenmasse | 327 g |
| davon: | |
| TOC | 88,3 g |
| (davon: organischer Stickstoff: 6,5 g) | |
| Ammonium-Stickstoff (DIN 38406, Teil 5) | 3,9 g |
| Phosphat (DIN 38406, Teil 5) | 5,9 g |
| Schwefel (DIN 51724, Teil 2) | 1,5 g |
| Calciumoxid (DIN 38406, Teil 3) | 19,4 g |
| Magnesiumoxid (DIN 38406, Teil 3) | 9,0 g |
| Kaliumoxid (DIN 38414, Teil 12) | 3,2 g |
| Natrium (DIN 38406, Teil 14) | 4,8 g |
| Eisen (DIN 38406, Teil 32) | 0,5 g |
| | 136,5 g |
| Glührückstand | 141,0 g |

**Patentansprüche**

1. Bodenmaterial, **dadurch gekennzeichnet, dass** seine Trockenmasse einen organischen Kohlenstoffgehalt (TOC) von 20 - 40 Gew.-%, vorzugsweise 25 - 30 Gew.-% aufweist.

2. Bodenmaterial nach Anspruch 1, **dadurch gekennzeichnet, dass** 3 - 12 Gew.-% , vorzugsweise 5 - 10 Gew.-% des TOC organischer Stickstoff ist.

3. Bodenmaterial nach Anspruch 1 oder 2, **dadurch gekennzeichnet, dass** es einen Glühverlust von 35 - 70 Gew.-%, vorzugsweise 45 - 65 Gew.-% jeweils bezogen auf die Trockenmasse, aufweist.

4. Bodenmaterial nach einem der vorherigen Ansprüche, **dadurch gekennzeichnet, dass** er 3 - 10 Gew.-% , vorzugsweise 4 - 7 Gew.-% Calciumoxid (CaO) jeweils bezogen auf die Trockenmasse, aufweist.

5. Bodenmaterial nach einem der vorherigen Ansprüche, **dadurch gekennzeichnet, dass** er 1 - 7 Gew.-% , vorzugsweise 2 - 5 Gew.-% Magnesiumoxid (MgO) jeweils bezogen auf die Trockenmasse, aufweist.

6. Bodenmaterial nach einem der vorherigen Ansprüche, **dadurch gekennzeichnet, dass** er 3 - 10 Gew.-% , vorzugsweise 4 - 7 Gew.-% CaO jeweils bezogen auf die Trockenmasse, aufweist.

**7.** Bodenmaterial nach einem der vorherigen Ansprüche, **dadurch gekennzeichnet, dass** er 0,5 - 5 Gew.-% , vorzugsweise 1 - 4 Gew.-% Phosphat jeweils bezogen auf die Trockenmasse, aufweist.

**8.** Bodenmaterial nach einem der vorherigen Ansprüche, **dadurch gekennzeichnet, dass** 0,5 - 4 Gew.-% , vorzugsweise 0,7 - 3 Gew.-% Ammonium-Stickstoff jeweils bezogen auf die Trockenmasse, aufweist.

**9.** Bodenmaterial nach einem der vorherigen Ansprüche, **dadurch gekennzeichnet, dass** er bis zu 80 Gew.-%, vorzugsweise bis zu 70 Gew.-% Wasser bezogen auf die Gesamtmasse aufweist.

**10.** Bodenmaterial nach Anspruch 9, **dadurch gekennzeichnet, dass** es ein Gemisch aus Hafenschlick und Gülle ist.

**11.** Bodenmaterial nach Anspruch 10, **dadurch gekennzeichnet, dass** der Hafenschlick und/oder die Gülle vorbehandelt sind.

**12.** Verwendung des Bodenmaterials gemäß einem der Ansprüche 1 - 11 zur Begrünung von Wüsten.